## Europäisches Patentamt
## European Patent Office
## Office européen des brevets

(11) Veröffentlichungsnummer: **0 035 001**
A2

# (12) EUROPÄISCHE PATENTANMELDUNG

(21) Anmeldenummer: **81810061.2**

(22) Anmeldetag: **25.02.81**

(51) Int. Cl.³: **C 10 B 53/00**
C 10 J 3/18, C 10 B 19/00

(30) Priorität: 26.02.80 CH 2516 80

(43) Veröffentlichungstag der Anmeldung:
02.09.81 Patentblatt 81 35

(84) Benannte Vertragsstaaten:
DE FR GB

(71) Anmelder: **Ing. A. Maurer, Société Anonyme**
**Dammweg 3**
**CH-3013 Bern (Kanton Bern)(CH)**

(72) Erfinder: **Halm, Eduard**
**Wartbodenstrasse 39**
**D-3626 Hünibach BE(DE)**

(74) Vertreter: **Bovard, Fritz Albert et al,**
**Bovard & Cie Patentanwälte VSP Optingenstrasse 16**
**CH-3000 Bern 25(CH)**

(54) Verfahren zur kontinuierlichen thermischen Behandlung von verkohlbarem Ausgangsmaterial.

(57) Das Verfahren ermöglicht die thermische Behandlung, d.h. die Erhitzung auf hohe Temperaturen, die Pyrolyse oder Vergasung von Materialien, die bei hohen Temperaturen verkohlen, also z.B. Holz, Zellstoff, Haushaltmüll, Altreifen, Kunststoff, Teersand, Oelschiefer usw. in einem elektrischen Schachtofen. Bisher konnte solches Material in elektrischen Schachtöfen, bei denen Strom über Elektroden durch das Ofengut geleitet wird, nicht erhitzt werden, da es an sich den elektrischen Strom nicht leitet. Das Verfahren zeichnet sich dadurch aus, dass das Material oben in einen elektrischen Schachtofen eingefüllt und kontinuierlich so langsam durch den Ofen nach unten bewegt wird, dass es infolge von Wärmeübertragung von den heisseren Ofenpartien so weit verkohlt, dass es elektrisch leitend wird, bis es in Kontakt mit den Elektrodenteilen kommt, über die elektrischer Strom durch das Material geleitet wird. Das Absinken des oben eingefüllten Materials kann z B dadurch bewirkt werden, dass entsprechende Megen festes Material unten aus dem Ofen ausgeschleust werden, oder auch dadurch, dass das Material mit Wasserdampf vergast wird

./...

## Verfahren zur kontinuierlichen thermischen Behandlung von verkohlbarem Ausgangsmaterial

Verkohlbares Material, z.B. Holz, Zellulose, Papier, Kunststoff, Gummi, kohlenwasserstoffhaltige Gesteine, wurde bisher fast ausschliesslich indirekt in Retorten mit Aussenbeheizung oder durch Teilverbrennung des Materials selbst oder auch durch direkte Wärmeübertragung mit den das zu erhitzende Material durchströmenden heissen Gasen erhitzt. Eine Erhitzung mittels Durchleitung von elektrischem Strom war bisher nicht möglich, weil das unverkohlte Material eine zu geringe elektrische Leitfähigkeit aufwies.

Es ist eine Aufgabe der vorliegenden Erfindung, ein Verfahren zur kontinuierlichen thermischen Behandlung von verkohlbarem, in kaltem Zustand nicht leitenden Ausgangsmaterial zu schaffen, bei welchem das Material mittels Durchleitung von elektrischem Strom erhitzt wird und eine Pyrolyse und/oder Vergasung stattfindet.

Dies wird erfindungsgemäss dadurch erzielt, dass das Material oben in einen elektrischen Schachtofen eingefüllt und kontinuierlich so langsam durch den Ofen nach unten bewegt wird, dass es infolge von Wärmeübertragung von den heisseren Ofenpartien so weit verkohlt, dass es elektrisch leitend wird, bis es in Kontakt mit den Elektrodenteilen kommt, über die elektrischer Strom durch das Material geleitet wird. Bevorzugte Ausführungsformen der Erfindung ergeben sich aus den abhängigen Ansprüchen.

Die Sinkgeschwindigkeit des Materials im Schachtofen kann z.B. dadurch geregelt werden, dass eine entsprechende Menge Material unten aus dem Ofen ausgetragen wird oder auch dadurch, dass eine entsprechende Menge Material in der Heizzone des Ofens mittels eines Vergasungsmittels, z.B. Wasser oder Kohlendioxid, vergast wird. Wenn die Sinkgeschwindigkeit zu gross ist, kann das Material auch nicht wenigstens teilweise an der Oberfläche verkohlen. Somit wird es nicht elektrisch leitfähig und der von den Elektroden zugeführte Strom wird unterbrochen und damit auch der Erhitzungsprozess. Bei zu kleiner Sinkgeschwindigkeit des Materials wird andererseits die Leistungsfähigkeit des Ofens nicht optimal ausgenützt.

Zum Anfahren des Ofens ist es notwendig, den Raum zwischen den Elektroden vorerst mit elektrisch leitender Kohle zu füllen und das zu erhitzende verkohlbare Material im oberen Ofenteil langsam vorzuwärmen; nach Erreichung der Betriebstemperatur im unteren Teil des Ofens kann das Ingangsetzen der Abwärtsbewegung des Materials im Ofen beginnen, indem z.B. entweder unten eine entsprechende Menge Material aus dem Ofen abgezogen wird oder auch dadurch, dass die Vergasung in der Heizzone eingeleitet wird.

Der hier verwendete Begriff der thermischen Behandlung umfasst im Sinne der vorliegenden Erfindung die Erhitzung, thermische Entgasung und Vergasung.

Die thermische Behandlung nach dem erfindungsgemässen Verfahren kann u.a. auch von der Pyrolyse oder Vergasung der zu Beginn der Beschreibung angeführten Materialien begleitet sein, also etwa zur Holzverkohlung, zur pyrolytischen Zersetzung von Zellstoff, Papier, Haushaltmüll, Kunststoffabfall, Altreifen, Oelschiefern
oder -sanden usw. dienen, oder falls ein Vergasungsmittel wie etwa Wasser oder Kohlendioxid eingeführt
wird, zur Erzeugung von Heiz- oder Synthesegas.

Zur Durchführung des erfindungsgemässen Verfahrens
eignen sich grundsätzlich sowohl Einphasen- als auch
Dreiphasen-Elektro-Schachtöfen, in denen das wenigstens
teilweise verkohlte Material zwischen Elektroden mit
direktem Stromdurchgang erhitzt wird.

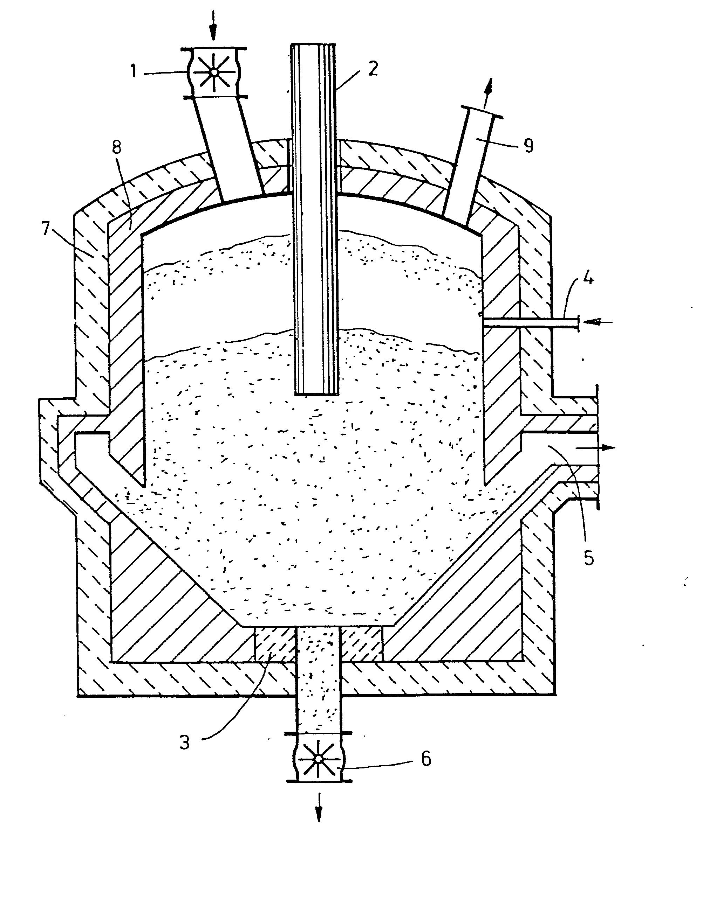

Ausführungsbeispiele der Erfindung werden im folgenden anhand der beiliegenden Figur, welche einen
Längsschnitt durch einen Schachtofen darstellt, erläutert.

Beispiel 1

Zur vollständigen Vergasung von Holz zwecks Herstellung eines Gases, das nahezu 50% $H_2$ und 50% CO
enthält und sich z.B. als Synthesegas zur Herstellung
von Methanol eignet, wird getrocknetes Holz in dem in
der Figur dargestellten elektrischen Schachtofen durch
die Schleuse 1 eingefüllt. Das Holz hat eine Stückgrösse
von ca. 3 - 5 cm Kantenlänge. Zwischen der oberen
Elektrode 2 und der Bodenelektrode 3 fliesst Gleichstrom durch das mindestens teilweise verkohlte Holz,
wobei Wärme erzeugt wird. Die Temperatur im unteren
Teil des Ofens wird auf mindestens 800° C gehalten.
Durch den Stutzen 4 wird Wasserdampf in den Ofen
eingeleitet, der im unteren Teil des Ofens mit der
Holzkohle unter Bildung von $H_2$ und CO reagiert. Durch
diese Reaktion wird Holzkohle verbraucht, so dass das
oben in den Ofen eingefüllte Holz kontinuierlich gegen
unten sinkt und sich dabei durch Wärmeübertragung
sowohl von dem darunterliegenden heisseren Material als
auch von den heisseren Teilen der oberen Elektrode
erwärmt und wenigstens teilweise oberflächlich soweit
verkohlt, dass es spätestens dann elektrisch leitend
wird, wenn es in Kontakt mit dem stromabgebenden Ende
der oberen Elektrode kommt. Die Gase, einschliesslich
der gasförmigen Zersetzungsprodukte des Holzes, strömen

nach unten durch die auf mindestens 800° C erhitzte Holzkohle und verlassen den Ofen durch den ringförmigen Gaskanal 5 als ein Gasgemisch von etwa 50% $H_2$ und 50% CO. Die Holzasche kann unten bei 6 aus dem Ofen ausgeschleust werden. Der Ofenkörper besteht aus einem Stahlmantel 7, der innen mit keramischem Material 8 ausgekleidet ist.

Ein Ofen von ca. 2'200 mm Innendurchmesser und ca. 3'500 mm Elektrodenabstand kann bei einer Spannung von ca. 100 Volt mit ca. 30'000 Ampere belastet werden, was einer elektrischen Leistung von 3'000 kW entspricht. Dabei werden etwa 4'000 kg Holz pro Stunde verbraucht und etwa 3'000 $m^3$ Gas (bei Normalbedingungen) erzeugt. Bei dieser Leistung ist die Absinkgeschwindigkeit des Holzes im oberen Ofenteil so klein, dass es durch teilweise Verkohlung genügend elektrisch leitend ist, wenn es in Kontakt mit dem stromabgebenden Ende der Elektrode kommt.

Beispiel 2

Zur vollständigen Vergasung von Haushaltmüll mit Gewinnung eines Gases, das nahezu 50% $H_2$ und 50% CO enthält und sich z.B. als Synthesegas zur Herstellung von Menthanol eignet, wird unter anderem getrockneter Müll folgender Zusammensetzung oben in den Ofen gemäss der Figur eingefüllt:

| | |
|---|---|
| Zeitungspapier | 38,5 % |
| Magazinpapier | 12,8 % |
| Küchenabfälle | 2,6 % |
| Kunststoffe | 5,1 % |
| Textilien | 2,5 % |
| Sand | 18,0 % |
| Glas | 2,05% |

Zwischen der oberen Elektrode 2 und der Bodenelektrode 3 fliesst Gleichstrom oder Einphasen-Wechselstrom durch den mindestens teilweise verkohlten Müll, wobei Wärme erzeugt wird. Die Temperatur im unteren Teil des Ofens wird auf mindestens 800° C gehalten. Durch den Stutzen 4 wird Wasserdampf in den Ofen eingeleitet, der im unteren Teil des Ofens mit dem Kohlenstoff des Mülls unter Bildung von $H_2$ und CO reagiert. Die Schlacke kann in fester oder flüssiger Form vom Ofenboden abgelassen werden. Der oben in den Ofen eingefüllte Müll sinkt kontinuierlich nach unten und erwärmt sich dabei sowohl von dem darunterliegenden heisseren Material als auch von den heisseren Teilen der oberen Elektrode und verkohlt dabei so weit, dass er elektrisch leitend wird, wenn er in Kontakt mit dem stromabgebenden Ende der oberen Elektrode kommt. Die Gase, einschliesslich der gasförmigen Zersetzungsprodukte des Mülls, strömen nach unten durch den auf mindestens 800° C erhitzten und mindestens teilweise verkohlten Müll und verlassen den Ofen durch den ringförmigen Gaskanal 5 als ein Gasgemisch von etwa 50% $H_2$ und 50% CO.

Ein Ofen von ca. 2'200 mm Innendurchmesser und ca. 3'500 mm Elektrodendistanz kann bei einer Spannung von ca. 100 Volt mit ca. 30'000 Ampere belastet werden, was einer elektrischen Leistung von ca. 3'000 kW entspricht. Dabei werden etwa 8 Tonnen trockener Müll pro Stunde vergast.

Beispiel 3

Zur Pyrolyse von Altreifen werden diese oben in den Ofen gemäss der Figur eingefüllt. Zwischen der oberen Elektrode 2 und der Bodenelektrode 3 fliesst Gleichstrom oder Einphasenwechselstrom durch den bei der Pyrolyse entstandenen Koks, wobei Wärme erzeugt wird. Die Temperatur im unteren Teil des Ofens wird auf mindestens 600° C gehalten. Der entstandene Pyrolysekoks wird zusammen mit der Asche unten bei 6 aus dem Ofen ausgeschleust. Durch die Pyrolyse und die Ausschleusung des Kokses werden die oben eingefüllten Altreifen kontinuierlich zum Absinken gebracht, wobei sie sich durch Wärmeübertragung sowohl von dem darunterliegenden heisseren Material als auch von den heisseren Teilen der oberen Elektrode erwärmen und wenigstens teilweise so weit verkohlen, dass sie spätestens dann elektrisch leitend werden, wenn sie in Kontakt mit dem stromabgebenden Ende der oberen Elektrode kommen. Die gasförmigen Zersetzungsprodukte strömen nach oben und verlassen den Ofen durch den Stutzen 9.

Ein Ofen von ca. 2'000 mm Innendurchmesser und ca. 3'000 mm Elektrodenabstand kann bei einer Spannung von 80 Volt mit etwa 20'000 Ampere belastet werden, was einer elektrischen Leistung von 1'600 kW entspricht. In diesem Ofen können etwa 2 Tonnen Altreifen pro Stunde pyrolysiert werden.

Das verkohlbare Ausgangsmaterial, z.B. Holz oder Müll, kann auch Feuchtigkeit enthalten, wobei das Ausgangsmaterial zusammen mit dem aus diesem ausgetriebenen Wasserdampf und den anderen gasförmigen Zersetzungsprodukten vergast.

PATENTANSPRUECHE

1. Verfahren zur kontinuierlichen thermischen Behandlung von verkohlbarem Ausgansmaterial, dadurch gekennzeichnet, dass das Material oben in einen elektrischen Schachtofen eingefüllt und kontinuierlich so langsam durch den Ofen nach unten bewegt wird, dass es infolge von Wärmeübertragung von den heisseren Ofenpartien so weit verkohlt, dass es elektrisch leitend wird, bis es in Kontakt mit den Elektrodenteilen kommt, über die elektrischer Strom durch das Material geleitet wird.

2. Verfahren nach Patentanspruch 1, dadurch gekennzeichnet, dass in einem elektrischen Schachtofen zwischen den Elektroden vorerst Kohle erhitzt und das zu behandelnde Material oben auf die Kohle aufgeschüttet wird, die Kohle hierauf kontinuierlich aus dem Ofen entfernt wird und die Kohle kontinuierlich durch mindestens teilweise verkohltes zu behandelndes Material ersetzt wird, wobei dieses auf mindestens 600°C erwärmt und kontinuierlich nur so schnell aus dem Ofen entfernt wird, dass dem Ofen oben neu zugeführtes Material wenigstens so weit verkohlt, dass der Strom nicht abreisst.

3. Verfahren nach Patentanspruch 1, dadurch gekennzeichnet, dass das Material auf mindestens 600°C erhitzt wird, so dass es sich zu Koks und gasförmigen Spaltprodukten zersetzt.

4. Verfahren nach Patentanspruch 1, dadurch gekennzeichnet, dass das Material auf mindestens 800°C erhitzt und zusammen mit Wasserdampf vergast wird.

5. Verfahren nach Patentanspruch 1, dadurch gekennzeichnet, dass als Ausgangsmaterial Holz verwendet

wird wobei das Holz wenigstens oberflächlich verkohlt, zwecks Wärmeerzeugung elektrischer Strom durch das mindestens teilweise verkohlte Holz geleitet wird, und dass ferner die Stromzufuhr und damit die Wärmeerzeugung so eingestellt wird, dass das Holz verkohlt, bis es am unteren Ende des Ofens als Holzkohle kontinuierlich mit regulierbarer Geschwindigkeit ausgetragen wird.

6. Verfahren nach Patentanspruch 1, dadurch gekennzeichnet, dass das Ausgangsmaterial wenigstens oberflächlich verkohlt und der Strom durch das mindestens teilweise verkohlte Ausgangsmaterial geleitet wird, so dass das Ausgangsmaterial verkohlt und zusammen mit oben in den Ofen von aussen eingeleitetem und/oder aus dem Ausgangsmaterial ausgetriebenem Wasserdampf vergast und die Gase einschliesslich der gasförmigen Zersetzungsprodukte des Ausgangsmaterials den Ofen nach unten durchströmen, um im unteren Teil abgezogen zu werden, wobei die Stromzufuhr und damit die Wärmeerzeugung so eingestellt wird, dass eine Vergasungstemperatur von mindestens 800°C eingehalten wird und die von der Vergasungsgeschwindigkeit abhängige Sinkgeschwindigkeit des Ausgangsmaterials im oberen Ofenteil nicht so gross wird, dass der elektrische Kontakt zwischen den Elektroden abreisst.

7. Verfahren nach Patentanspruch 6, dadurch gekennzeichnet, dass als Ausgangsmaterial feuchtes Holz verwendet wird und das Holz mit dem aus dem Holz ausgetriebenen Wasserdampf und den anderen gasförmigen Holzzersetzungsprodukten vergast.

8. Verfahren nach Patentanspruch 6, dadurch gekennzeichnet, dass als Ausgangsmaterial feuchter Müll verwendet wird und der Müll mit dem aus dem Müll ausgetriebenen Wasserdampf und den anderen gasförmigen Müll-Zersetzungsprodukten vergast.

9. Verfahren nach Patentanspruch 1, dadurch gekennzeichnet, dass als Ausgangsmaterial Kunststoffabfälle verwendet werden und die Kunststoffabfälle wenigstens oberflächlich verkohlen, wobei der Strom durch die mindestens teilweise verkohlten Abfälle geleitet wird, so dass die Abfälle weiter verkohlen, wobei die gasförmigen Zersetzungsprodukte oben aus dem Ofen abgezogen werden und der verkohlte feste Rückstand unten aus dem Ofen ausgetragen wird, und zwar mit einer Geschwindigkeit, die zusammen mit der von der Stromzufuhr abhängigen Entgasungsgeschwindigkeit eine Sinkgeschwindigkeit der Abfälle im oberen Ofenteil ergibt, die nicht so gross ist, dass der elektrische Strom zwischen den Elektroden abreisst.

10. Verfahren nach Patentanspruch 1, dadurch gekennzeichnet, dass als Ausgangsmaterial Altreifen verwendet werden, die wenigstens oberflächlich verkohlen, und der Strom durch die mindestens teilweise verkohlten Altreifen geleitet wird, so dass die Altreifen weiter verkohlen, wobei die gasförmigen Zersetzungsprodukte oben aus dem Ofen abgezogen werden und der verkohlte feste Rückstand unten aus dem Ofen ausgetragen wird, und zwar mit einer Geschwindigkeit, die zusammen mit der von der Stromzufuhr abhängigen Entgasungsgeschwindigkeit eine Sinkgeschwindigkeit der Altreifen im oberen Ofenteil ergibt, die nicht so gross ist, dass der elektrische Strom zwischen den Elektroden abreisst.

11. Verfahren nach Patentanspruch 6, dadurch gekennzeichnet, dass als Ausgangsmaterial Kunststoffabfälle verwendet werden und die Abfälle zusammen mit oben in den Ofen von aussen eingeleitetem Wasserdampf vergasen.

12. Verfahren nach Patentanspruch 6 dadurch gekennzeichnet, dass als Ausgangsmaterial trockenes Holz verwendet wird und das Holz zusammen mit oben in den Ofen von aussen eingeleitetem Wasserdampf vergast.

13. Verfahren nach Patentanspruch 6, dadurch gekennzeichnet, dass als Ausgangsmaterial getrockneter Müll verwendet wird und der Müll zusammen mit oben in den Ofen von aussen eingeleitetem Wasserdampf vergast.

14. Verfahren nach Patentanspruch 6, dadurch gekennzeichnet,dass als Ausgangsmaterial Altreifen verwendet werden und die Altreifen zusammen mit oben in den Ofen von aussen eingeleitetem Wasserdampf vergasen.